# EUROPEAN PATENT APPLICATION

(11) **EP 0 546 561 A1**
(43) Date of publication of application: **16.06.1993**
(21) Application number: 92121136.3
(22) Date of filing: 11.12.1992
(51) Int. Cl.: F16K 5/06

(54) **Valve**

(30) Priority: 13.12.1991 DK 2004/91
(71) Applicant: BROEN ARMATUR A/S, DK-5610 Assens (DK)
(72) Inventor: Nielsen, Leif D., DK-7000 Fredericia (DK)
(74) Representative: Kyed, Iver

(57) **Abstract**

A valve comprises a ball-shaped valve member (2) which is arranged in a valve body (1). The valve member (2) has a flow passage (11) which may be arranged in two positions in order to open and close the flow passage through the valve body (1). The valve body (1) and the valve member (2) are in a simple way provided with cooperating stop members (21,22,23) which define an open and a closed position which makes the valve functionally reliable.

The stop surfaces of the valve body are constituted of a ring-shaped surface (23) which is formed by rotating a groove (24) in the valve body. This rotation may easily be carried out as said rotation takes place simultaneously with the manufacturing of the other part of the valve body (1). The ring-shaped stop surface (23) cooperates with stop surfaces (21,22) which are arranged on one or several projections (8,8') or a collar (28), which is arranged at the bottom, respectively the top of the valve member (2). During rotation of the valve member the stop surfaces (21,22) will abut the ring-shaped surface (23) when the open and closed position of the valve is defined.

## Description

### BACKGROUND OF THE INVENTION.

The present invention relates to a valve, preferably a ball valve, having a rotatable valve member having a flow passage, and a substantially cylindrical control member extending from the top of the valve member through a lateral wall in a valve body, in which the valve member is mounted, said valve body has two flow ports arranged concentrically around a longitudinal axis through the valve body which moreover is provided with inner stop members which cooperate with the stop members formed on the valve member in order to define two extreme positions for rotating the valve member between an open position in which the flow passage connects the flow ports and a closed position in which the flow passage is rotated through an angle, preferably 90 °, which is sufficient to prevent the flow passage from connecting the two flow ports. Often such valves are used as stop valves in supply pipes for hot and cold water and in a position immediately before a consumption site. However, the valves may also be used in other supply pipes.

Up to now it has been known to manufacture a valve of the above-mentioned type by forming a stop inside the valve body by broaching a groove in which a projection at the bottom of the valve member may be rotated 90 between two extreme positions, one position where the flow passage of the valve member connects the two ports of the valve body (open position), and one position where the flow passage of the valve member is perpendicular to the passages in such a way that no connection exists between the two ports of the valve body (closed position).

By broaching a groove for forming the stop members of the valve body in form of the surface which is formed by the lateral wall of the broached groove, various difficulties of a technical manufacturing nature have occured. Thus, there is a risk of breaking a broach blade used. This has resulted in the necessity of a complete inspection of the groove formed in order to ensure manufacturing of correctly formed products. Such an inspection is slow and time-consuming.

Other valves are also known which have internal stops in order to define the open position, respectively the closed position of the valve in two extreme positions for rotating the valve member. However, these valve constructions have been associated with difficulties of a technical manufacturing or a technical operating nature.

It is the object of the invention to remedy the above-mentioned drawbacks and to provide a valve which also is simple to manufacture and which is functionally reliable.

According to the present invention this is obtained with a valve of the above-mentioned type, characterized in that the stop members of the valve body are constituted of a ring-shaped surface which is concentrically around the longitudinal axis of the valve body and which is situated in a plane perpendicular to said longitudinal axis, and that the stop of the valve member is constituted of two stop surfaces which are arranged optionally at the top or at the bottom of the valve member in a position opposite the ring-shaped surface in the valve body.

The stop members of the valve body which are constituted of a concentrical ring-shaped surface which is situated in a plane perpendicular to the longitudinal axis through the body may easily and simply be formed in the valve body. The stop surface may be manufactured by turning an inner ring-shaped groove, whereby the stop surfaces are formed as a lateral wall in said groove. This is simple with regard to technical manufacturing and may be manufactured with great security as the valve body anyway is manufactured with a working which takes place in the form of a turning. As the stop surface may be formed by the manufacturing of the valve body while this remains fixed in a manufacturing apparatus, a security for a correct form of the stop surface is obtained, and thereby a correct subsequent function for the valve.

It is noted that the stop surface produced in the valve body does not necessarily need to be formed in a valve body as normally understood. Thus, the stop surface may as well be formed on a separate part of a valve body, e.g. a retaining ring or the like, which is screwed or secured into an outer valve body in order to fixate the valve member in its correct position in the valve body. Accordingly, the stop surface may be formed by the terminal surface on a cylindrically formed holding element.

The stop surfaces of the valve member only need to be situated in a position opposite the ring-shaped stop surface of the valve body and may thus be optionally arranged at the top or at the bottom of the valve member, depending on which is appropriate in a certain valve construction. It is noted that the expressions "the top" and "the bottom" only are used for explanatory purpose, and that the top of the valve member is used in order to indicate the end of the valve member which extends through a lateral wall in the valve body.

The stop surfaces of the valve member may be formed in a simple way by a projecting collar at the top of the valve member, and a part of said collar may appropriately be removed in order to define the stop surfaces of the valve member as a part of the remaining encircling surface of the collar. Alternatively, two radial projections may instead be provided at the top of the valve member, said projections are arranged in such a way that they also define the stop surfaces which cooperate with the ring-shaped stop surface of the valve body.

In a similar way the valve member may very simply be manufactured with one or several projections at the bottom. The projections at the bottom may also be defined as a collar or as a cylindrical projection, where a part of the encircling surface is removed for forming the stop surfaces of the valve member. At the bottom of the valve member the stop surfaces may also be provided by forming two separate projections, e.g. two projecting pins which provide the stop surfaces of the valve member.

Even though the stop surfaces of the valve member may be manufactured in various ways it will preferably be manufactured as a projecting collar at the top or at the bottom of the valve member with regard to an appropriate working and a great strength in the valve member, said collar is manufactured with a part of its encircling surface removed for forming the stop surfaces of the valve member.

The invention will now be explained in further detail with reference to the accompanying drawings wherein
Fig. 1 is a longitudinal section through a valve according to an embodiment of the invention,
Fig. 2 is a longitudinal section through an outer valve body of a valve according to the invention,
Fig. 3 is an axial section through a retaining ring for use in an outer valve body,
Fig. 4 and 5 is a view seen from below, respectively a section through a valve member of a valve according to a first embodiment of the invention,
Fig. 6 and 7 is a view seen from below, respectively a section through a valve member of a valve according to another embodiment of the invention,
Fig. 8 and 9 are two sectional views through a valve member of a valve according to a third embodiment of the invention, and
Fig. 10 is a sectional view of a valve member of a valve corresponding to Figure 8 for the illustration of a fourth embodiment according to the invention.

Identical or corresponding elements in the various Figures of the drawing are denoted with the same reference numbers.

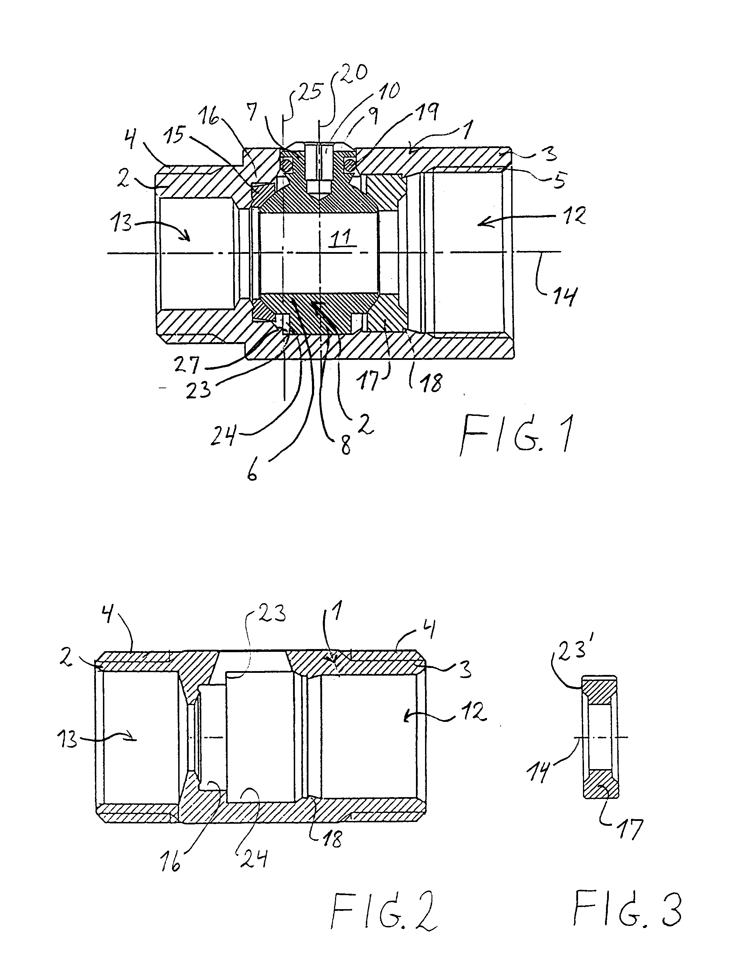

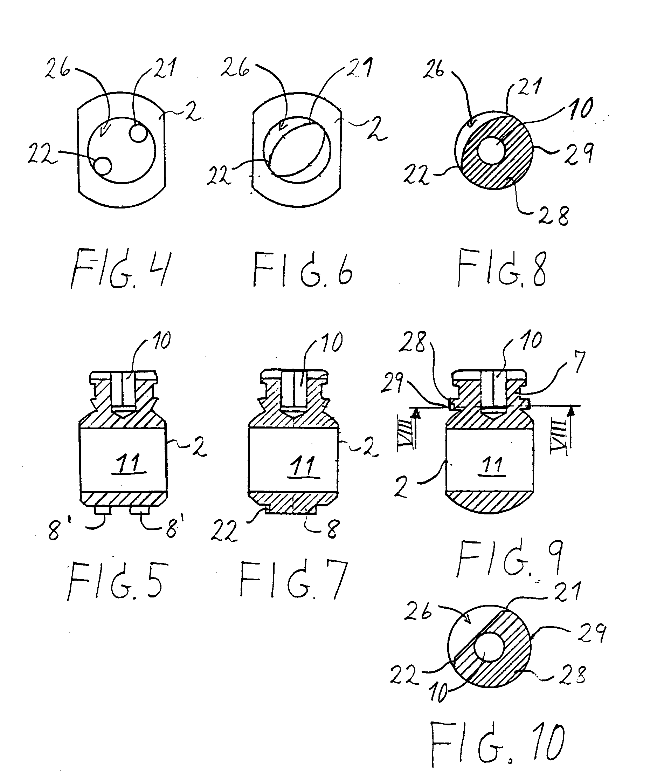

Figure 1 illustrates a longitudinal section through a valve according to an embodiment of the invention. The valve is illustrated in a state of completeness ready for use. Reference number 1 denotes an outer valve body and reference number 2 denotes a valve member which is ball-shaped and which also is illustrated in Figures 6 and 7.

The valve body 1 is made from a piece of a hexagonal rod material and is provided with a connecting piece 2,3 at each end. The connecting piece 2 is provided with an outer thread 4 and the connecting piece 3 is provided with an inner thread 5. Thus, the valve may be inserted in a supply pipe and work as a stop valve. It is noted that the body does not necessarily need to be made in one piece of the hexagonal rod material. Accordingly, one or both connecting pieces 2,3 may be constituted of a separate sleeve which is screwed into an outer body part in order to maintain the valve member 2 in its correct position in the valve body 1.

The valve cock 6 of the valve member 2 is provided with a control member in the form of a head 7 which is arranged at the top of the valve member 2 and extending through an opening in the lateral wall of the valve body 1. At the bottom of the valve member 2 a projection 8 is formed which will be explained in more detail later. The head 7 is provided with a transverse notch 9 and a hexagonal blind hole 10 so that the valve member may optionally be rotated by means of a screwdriver or a wrench between an open position and a closed position in which the valve member 2 is rotated 90_{°}.

In the open position illustrated a flow passage 11 will connect two flow ports 12,13 through the valve member 2 in the valve body 1. The flow ports 12,13 and the flow passage 11 are arranged concentrically around a longitudinal axis 14 through the valve body 1. In a sealed way the valve member 2 is arranged in the body 1 by using a sealing ring 15 which is arranged in a recess 16 in the valve body 1. The sealing ring 15 abuts the ball-shaped surface of the valve cock 6. Towards the opposite side of the valve cock 6 a retaining ring 17 is pressed in by a material which may be deformed in such a way that after the pressing the retaining ring 17 is maintained behind a saw tooth-shaped projection 18 in the valve body 1. An O-ring 19 is arranged between the valve head 7 and the valve body 1.

When the valve member 2 is rotated around an axis of rotation 20 through 90 thus an unbroken spherical surface will abut the sealing ring 15, respectively the retaining ring 17 and blocks liquid flow through the valve.

At the bottom of the valve member 2 the projection 8 provides stop members 21,22 on the valve member (see Figure 6). The stop members 21,22 of the valve member are constituted of lateral faces on the projection 8. These lateral faces or stop surfaces 21,22 cooperate with the stop members of the valve body 1 which are constituted of a ring-shaped surface 23 which is formed by turning a groove 24 inside the valve body 1. The ring-shaped surface 23 passes concentrically by the longitudinal axis 14 of the valve body 1 and is situated in a plane 25 perpendicular to the longitudinal axis 14. The two stop surfaces 21,22 of the valve member 2 are arranged in a position opposite the ring-shaped surface 23. By rotating the valve member 2 the one, respectively the other of the surfaces 21 or 22 will abut the ring-shaped surface 23 and thereby define the open position, respectively the closed position of the valve. The turned groove is quite simple to manufacture simultaneously with the manufacturing of the remaining part of the valve body 1.

Figure 2 illustrates a slightly modified embodiment for the valve body illustrated in Figure 1. The valve body according to Figure 2 differs primarily in that the two connecting pieces 2,3 both are provided with an outer thread 4. Furthermore, the saw tooth-shaped projection 18 intended for securing a retaining ring also has another form. However, Figure 2 illustrates clearly the turned groove 24, in which a ring-shaped surface 23 is formed which not only passes by the bottom of the valve body, but also passes by the top of the valve body. Thus, it is also possible to use the valve body 1 in connection with valve members 2 which have the stop surfaces 21,22 arranged at the top of the valve member. This embodiment for the valve members will be explained later with reference to Figures 8-10.

In Figure 3 a section through a retaining ring 17 is illustrated. The retaining ring 17 may be used in connection with a valve body 1 as illustrated in Figures 1 and 2, but may also be used in connection with a valve body which is not provided with a turned groove 24 which defines the ring-shaped surface 23. In this situation the one lateral face of the retaining ring 17 may define a ring-shaped surface 23' which provides the stop surface of the valve body. This stop surface 23' passes concentrically by the axis 14 which not only indicates a longitudinal axis through the valve body, but also indicates the central axis for the retaining ring 17. The retaining ring 17 is mounted firmly in an outer body part as illustrated in Figure 1.

Figures 4 and 5 illustrate a first embodiment for a valve member 2. This embodiment differs slightly from the other embodiment for the valve member which is illustrated in Figures 6 and 7. Thus, at the bottom the first embodiment is provided with two projecting pins 8' instead of a single projection 8. The two projecting pins 8' define the stop surfaces 21,22 of the valve member 2 which cooperate with the ring-shaped stop surface 23 in the valve body.

Figures 4-7 only illustrate two possible embodiments for forming the stop surfaces 21,22 of the valve member. Thus, stop surfaces 21,22 may be formed by means of one or several projections with any form when only this projection defines the two stop surfaces 21,22 with a mutual placing which ensures that the flow passage of the valve member may be rotated from a position where it connects the flow ports 12,13 of the valve body to a position where the ports 12,13 are disconnected.

Accordingly, the projection 8 may be elliptical as illustrated in Figure 6 or it may be rectilinear, be formed by a circular arc, or in another way, when only a clearance area 26 exists between the two stop surfaces 21,22 which may accommodate a shoulder 27 in the valve body 1 or on a retaining ring 17, on which the ring-shaped stop surface 23 is formed.

In Figures 8-10 embodiments are illustrated where the stop surfaces 21,22 of the valve member are arranged on a collar 28 which is radially projecting outwardly from the head 7 of the valve member 2. The collar 28 has an encircling surface 29 which is constituted of a rotary symmetric surface, of which a part is removed for forming the clearance area 26 and the two stop surfaces 21,22. The stop surfaces 21,22 are formed on a part of the remaining circumference 29 of the collar 28.

Figure 8 illustrates a section through the valve member 2 as illustrated in Figure 9 along the line VIII-VIII. In Figure 8 it is illustrated how the stop surfaces 21,22 are formed as a part of a circular surface.

In Figure 10 a section through a fourth embodiment is illustrated and corresponds to the section illustrated in Figure 8. However, the stop surfaces 21,22 are formed by a rectilinear removal of a part of the circumference of the collar 28'. Furthermore, a part of the collar is removed for forming two rectilinear stop surfaces 21,22 arranged perpendicular to each other.

It is noted that the stop surfaces do not necessarily need to be formed on an encircling collar, thus at the top of the valve member 2 the stop surfaces 21,22 may be formed by separate projections corresponding to the pins 8' in Figure 5 when only it is ensured that such projections define the stop surfaces 21,22 with the positions indicated in Figures 8-10.

It is noted that all embodiments for the valve member which are explained above will be able to cooperate with a ring-shaped stop surface 23 whether this is provided in an outer body part or not, as illustrated in Figure 1, or on a retaining ring 17 of the type illustrated in Figure 3. In both situations a valve construction is obtained which is easy to manufacture, and which also is functionally reliable as only by rotating the valve member between two extreme positions the user establishes partly an open position and partly a closed position for flow passage through the valve.

## Claims

1. Valve, preferably a ball valve, having a rotatable valve member having a flow passage, and a substantially cylindrical control member extending from the top of the valve member through a lateral wall in a valve body in which the valve member is mounted, said valve body has two flow ports arranged concentrically around a longitudinal axis through the valve body which moreover is provided with inner stop members which cooperate with the stop members formed on the valve member in order to define two extreme positions for rotating the valve member between an open position in which the flow passage connects the flow ports and a closed position in which the flow passage is rotated through an angle, preferably 90 °, which is sufficient to prevent the flow passage from connecting the two flow ports, characterized in that the stop members of the valve body are constituted of a ring-shaped surface which is concentrically around the longitudinal axis of the valve body and which is situated in a plane perpendicular to said longitudinal axis, and that the stop of the valve member is constituted of two stop surfaces which are arranged optionally at the top or at the bottom of the valve member in a position opposite the ring-shaped surface in the valve body.

2. Valve according to claim 1, characterized in that the valve member is a ball valve comprising a ball-shaped member, in which the flow passage is formed.

3. Valve according to claim 1 or 2, characterized in that the substantially cylindrical control member is provided with a collar which is radially projecting outwardly from the control member and having an encircling surface of which a part is removed for forming the stop surfaces of the valve member onto a part of the remaining encircling surface.

4. Valve according to claim 1 or 2, characterized in that the valve member diametrically opposite the control member is provided with a substantially cylindrical projection of which a part of the circumference is removed for forming the stop surfaces of the valve member onto a part of the remaining circumference.

5. Valve according to claim 1 or 2, characterized in that the valve member diametrically opposite the control member is provided with two projecting pins which provide the stop surfaces of the valve member.

6. Valve according to any one of the claims 2-5, characterized in that the stop surfaces of the valve member is formed inside an area which is delimited by the outer circumference of the ball valve member, as seen parallel to the axis of rotation of the ball valve member.

7. Valve according to any one of the preceding claims, characterized in that the valve member is constituted of several separate elements which are connected in a mutual rotary firm connection in order to make a conjoined rotation of the valve member.

8. Valve according to claim 7, characterized in that the rotary firm connection is a releasable connection, which is provided by cooperation with a projection on one of the separate elements of the valve member, which projection cooperates with corresponding formed cuts in another of the separate elements of the valve member.

9. Valve according to any one of the preceding claims, characterized in that the valve body is constituted of several elements and that the stop of the valve body is provided on an inner separate element, preferably a retaining ring, which is mounted firmly in an outer body part, preferably by pressing or by screwing into the outer body part.

10. Valve according to claim 1, characterized in that the stop of the valve body is provided by a turning of an area inside the valve body for forming of a groove in which a lateral wall forms the ring-shaped surface.
